# EUROPÄISCHE PATENTSCHRIFT

(11) **EP 0 955 076 B1**
(45) Veröffentlichungstag und Bekanntmachung des Hinweises auf die Patenterteilung: **07.03.2007**
(21) Anmeldenummer: 98810379.2
(22) Anmeldetag: 29.04.1998
(51) Int. Cl.: B01D 17/02, C10G 33/06

(54) **Verfahren zum Trennen einer ersten von einer zweiten Flüssigkeit**
Process for separating a first from a second liquid
Procédé pour séparer un premier d'un deuxième liquide

(43) Veröffentlichungstag der Anmeldung: 10.11.1999
(73) Patentinhaber: Sulzer Chemtech AG, 8404 Winterthur (CH)
(72) Erfinder: Mandrin, Charles, Dr., 8406 Winterthur (CH); Ruckstuhl, Hans, 8405 Winterthur (CH)
(74) Vertreter: Sulzer Management AG

(56) Entgegenhaltungen:
- EP-A- 0 615 776
- DE-A- 4 103 163
- GB-A- 1 485 017
- SOVIET INVENTIONS ILLUSTRATED Section Ch, Week 8148 Derwent Publications Ltd., London, GB; Class H01, AN 81-88622D XP002079987 & SU 808 096 B (TARTAR TATNIPINEFT) , 10. März 1981

## Beschreibung

Die Erfindung betrifft ein Verfahren zum Trennen einer ersten von einer zweiten Flüssigkeit, insbesondere zum Trennen von Wassertröpfchen aus Oel oder umgekehrt von Oeltröpfchen aus Wasser.

Oel aus Mineralquellen, nämlich Erdöl oder sogenanntes Kondensat, enthält in der Regel Wasser aufgrund von geologischen Vorgängen, von Meerwassereinbrüchen in Oel- bzw. Gasfeldern oder von injiziertem Druckwasser, das während der Oelgewinnung zur Aufrechterhaltung des Drucks im Oelfeld eingebracht worden ist. Kondensat ist eine Flüssigkeit aus schwereren Kohlenwasserstoffen, die bei der Erdgasgewinnung als Begleitstoffe auftreten und die vom Gas abgetrennt werden. Nachfolgend soll der Begriff Oel sowohl Erdöl als auch Kondensat umfassen.

Wasser ist in Oel, das als Rohstoff Raffinerien geliefert wird, nur in kleinen Mengen tolerierbar; wegen Korrosion in Transportschiffen oder Förderrohren, wegen Transportkosten für wertloses Wasser und wegen Fraktionierungsverfahren in den Raffinerien, die meistens nur wasserfrei durchgeführt werden können. In der Regel darf ein Oel, das mit Tankern transportiert wird, nicht mehr als 1 % Wasser enthalten.

Bei einem bekannten Apparat ("Performax Coalescer"), der als zylindrischer und horizontal angeordneter Behälter ausgebildet ist, werden Phasen eines Gemisches separiert, das aus den drei Phasen Gas, Oel und Wasser in Form sehr feiner Tröpfchen besteht. Die Wassertröpfchen, deren mittlerer Durchmesser im Bereich von rund 10 bis 30 µm liegt, entstehen bei einer Druckentspannung in einem Hochdruckventil ("choke valve"), wobei der Druckabfall ein Mehrfaches von 100 bar betragen kann. Die Werte der Tröpfchendurchmesser streuen stark um den Mittelwert.

Das Gas und das Oel/Wassergemisch fliessen - im oberen Teil des Apparats bzw. in dessen unteren Teil - von einem Eingangs- zu einem Ausgangsbereich. Wasser und Oel trennen sich dabei dank eines Dichteunterschieds; sie bilden beim Ausgangsbereich eine Schicht aus Oel, das nur noch 0,5 bis 1 % Wasser enthält, und eine darunter liegende Schicht aus Wasser, das mit Oel kontaminiert ist. Das Wasser muss nachbehandelt werden (z.B. mit Zentrifugalabscheidern), um eine für die Umwelt tolerierbare Qualität zu gewinnen.

Im Eingangsbereich des Dreiphasentrennapparats kann eine Packung zu folgenden Zwecken eingebaut sein: Ist der Einsatzort des Apparats beispielsweise ein Schiff oder eine schwimmende Bohrinsel ("Offshore-Anlagen"), so soll eine Rückvermischungen der drei Phasen aufgrund von Schaukelbewegungen verhindert werden; ausserdem soll die Koaleszenz der feinen Wassertröpfchen gefördert werden. Während der erste der angestrebten Zwecke ohne Zweifel erreicht wird, erscheint der zweite aber als fraglich, da die meisten der Tröpfchen beim Durchströmen der Packung nicht mit deren Oberfläche in Kontakt treten und somit ein die Koaleszenz fördernder Effekt nur schwach ausgebildet sein kann.

Dieser Dreiphasentrennapparat hat ein sehr grosses Volumen, was besonders bei Offshore-Anlagen von Nachteil ist. Es werden für das Oel Verweilzeiten von 3 bis 10 Minuten benötigt. Die Geschwindigkeiten der den Apparat durchfliessenden Phasen sind in der Grössenordnung von einigen Millimetern pro Sekunde.

DE-A-4 103 163 offenbart ein Verfahren zum Reinigen von Abwässern durch Dispergierung eines Sorptionsmittels in statischen Rohrmischern und ein anschließendes Abtrennen des Sorptionsmittels in einer durch Koaleszenz unterstützte Trennstule.

Es sind Wasser/Oelfilter bekannt, bei denen eine Koaleszenz auf einem Filtrierungseffekt und nicht auf einem Strömungs- oder Schwerkrafteffekt beruht. Diese Filter sind nur für geringe Wasseranteile im Bereich von 1% bis 10 ppm Wasser einsetzbar, da bei grösseren Wasseranteilen die Filter mit Wasser gesättigt und damit unwirksam werden.

Ausser einer Trennung von Wasser aus Oel sollte mit einem Trennapparat auch eine Trennung von Oel aus Wasser, wie sie beispielsweise bei Meeresverschmutzungen nach Tankerunfälle erforderlich ist, möglich sein.

Es ist Aufgabe der Erfindung, ein Verfahren zu schaffen, das die Trennung zweier Flüssigkeiten, deren eine in der anderen in Tröpfchenform enthalten ist, in einer möglichst kleinen Vorrichtung und/oder bei möglichst kurzen Verweilzeiten in der Vorrichtung erlaubt. Diese Aufgabe wird durch das in Anspruch 1 definierte Verfahren mit einer Vorrichtung gemäss Anspruch 7 gelöst.

Das erfindungsgemässe Verfahren dient zum Trennen einer ersten von einer zweiten Flüssigkeit, wobei die eine Flüssigkeit nicht in der anderen löslich ist, die erste Flüssigkeit als Tröpfchen in der zweiten enthalten ist und die beiden Flüssigkeiten verschiedene Dichten aufweisen. Das Verfahren umfasst folgende drei Schritte:
1. Zur Erzeugung einer Koaleszenz der Tröpfchen wird das Flüssigkeitsgemisch während einer ersten Zeitdauer als turbulente Strömung durch Einbauten - insbesondere durch einen in Packungskolonnen verwendbaren Füllkörper oder einen statischen Mischer - geleitet.
2. Die Strömung wird zu einer weiteren Ausbildung der Koaleszenz während einer zweiten Zeitdauer bei einer verkleinerten Geschwindigkeit gehalten.
3. Schliesslich wird die Strömung bei weiter verkleinerter Geschwindigkeit entgegen bzw. mit der Schwerkraft geführt, wobei grössere, sich absetzende bzw. aufsteigende Tropfen gesammelt und abgeschieden werden, wärend kleinere Tröpfchen durch die zweite Flüssigkeit weiter mitgeführt werden.

Gegenüber dem vorbekannten Verfahren ist beim erfindungsgemässen Verfahren die Verweilzeit des Oels in der Trennvorrichtung wesentlich reduziert und zwar dank dem, dass eine Vergrösserung der Tröpfchen in drei Schritten durchgeführt wird, wobei für jeden Schritt jeweils eine geeignete Wahl für die Strömungsgeschwindigkeit getroffen wird. Mit Einbauten und einer relativ hohen Strömungsgeschwindigkeit wird im ersten Schritt für Turbulenz gesorgt, so dass alle Tröpfchen einem Bewegungszustand unterworfen sind, der - wie experimentell nachweisbar - die Verschmelzung von kleinen Tröpfchen mit grösseren mit sich bringt, der also die Koaleszenz fördert. Im zweiten Schritt wird die Zweiphasenströmung beruhigt, wobei sich die Koaleszenz fortsetzt. Schliesslich wird im dritten Schritt die Trennung der Phasen aufgrund der Dichteunterschiede durchgeführt, wobei grosse Tröpfchen sich absetzen, jedoch kleine in der zweiten Flüssigkeit suspendiert bleiben. Das Absetzen der Wassertröpfchen im letzten Schritt kann mittels einer Packung verbessert werden. Das erfindungsgemässe Verfahren ergibt eine bessere Reinheit des Oels (bei durchgeführten Versuchen 0.05 % Wasser statt 0.5 bis 1 %). Die Trennung erfolgt nicht wie bei dem vorbekannten Trennapparat in Koexistenz des Flüssigkeitsgemisches mit einer Gasphase, so dass die Trennung weitgehend unabhängig von einer allfälligen Schaukelbewegung des Einsatzortes ist.

Weitere Versuche mit dem erfindungsgemässen Verfahren haben besonders gute Resultate ergeben: 0.1 bis 0.2 % Wasser im Oel, 20 ppm Oel im abgeführten Wasser. (Da bei einer Entsorgung von Wasser im Meer der Oelanteil nicht 40 ppm übersteigen darf, ist hinsichtlich dieser Versuchsergebnisse eine Nachreinigung des Wassers nicht mehr nötig.)

Die abhängigen Verfahrensansprüche 2 bis 5 und Vorrichtungsansprüche 7 bis 11 betreffen vorteilhafte Ausführungsformen der Erfindung. Gegenstand des Anspruchs 6 ist eine Anwendung des erfindungsgemässen Verfahrens.

Es ist bekannt, eine erste Flüssigkeit mittels statischer Mischer in einer zweiten Flüssigkeit zu dispergieren, so dass ein Flüssigkeitsgemisch entsteht, bei dem die eine Flüssigkeit in Tröpfchenform in der anderen Flüssigkeit suspendiert ist (siehe z.B. F. Streiff "Anwendung statischer Mischer beim Inline-Dispergieren", MM Maschinenmarkt, 1977, p. 289). Bei dem erfindungsgemässen Verfahren geht es um eine Umkehrung eines solchen Dispergierverfahrens, wobei teilweise ähnliche Mittel verwendet werden können, nämlich Einbauten, die die Struktur von statischen Mischern haben. Beim Studium des mit statischen Mischern durchgeführten Dispergierverfahrens stellt man fest, dass die Durchmesser der erzeugten Tröpfchen sich nicht beliebig klein machen lassen, sondern dass sich ein stationärer Zustand einstellt, der sich beim Durchströmen weiterer statischer Mischer nicht verändert. Ein solcher stationärer Zustand hängt von der Mischerstruktur und von der Strömungsgeschwindigkeit ab. Es ist zu vermuten, dass im stationären Zustand eine Erzeugung neuer Tröpfchen mit einer Vereinigung bestehender Tröpfchen im Gleichgewicht steht.

Grundgedanke der Erfindung ist nun, durch geeignete Veränderung der Betriebsbedingungen eine Verschiebung eines solchen Gleichgewichts anzustreben, bei dem die Vereinigungsprozesse überwiegen. Folglich sollte es möglich sein, für ein Flüssigkeitsgemisch, das kleine Tröpfchen enthält, bei einer geeigneten Behandlung in einem statischen Mischer eine Umkehrung der Dispergierwirkung zu erhalten, die zu einer Vergrösserung des mittleren Tröpfchendurchmessers führt. Experimente haben diese Vermutung bestätigt und damit gezeigt, dass mit dem ersten Schritt des erfindungsgemässen Verfahrens tatsächlich eine die Koaleszenz fördernde Massnahme gegeben ist.

Die Turbulenz des ersten Verfahrensschrittes soll so ausgebildet sein, dass eine möglichst kleine Anzahl grosser Tröpfchen zerfallen und möglichst viele kleine Tröpfchen sich vereinigen. Die Turbulenz muss lediglich die Wirkung haben, dass an jeder Stelle des Einbauteninnenraums eine genügend stark ausgebildete Umwälzung der Flüssigkeit vorliegt, so dass eine Trennung der Phasen aufgrund der Dichteunterschiede verhindert wird.

Zur Ausbildung der Turbulenz können auch andere Einbauten, die nicht für eine statische Mischung vorgesehen sind, beispielsweise Füllkörper, die in Packungskolonnen verwendbar sind, eingesetzt werden. Aus der EP-B 0 418 338 ist eine sogenannte Wirbelpackung bekannt, die sich gut zur Durchführung des ersten Verfahrensschrittes eignet.

Nachfolgend wird die Erfindung anhand der Zeichnungen erläutert. Es zeigen:
- Fig. 1: einen Dreiphasentrennapparat in dem das efindungsgemässe Verfahren durchführbar ist,
- Fig. 2: Einbauten zum Durchführen einer statischen Mischung,
- Fig. 3: ein Element zu einem weiteren Beispiel von Einbauten,
- Fig. 4a - 5: schematisch dargestellte Querschnitte durch erfindungsgemässe Vorrichtungen,
- Fig. 6: einen Längsschnitt durch eine erfindungsgemässe Vorrichtung,
- Fig. 7: einen Einsatz für die Vorrichtung der Fig. 6.,
- Fig. 8: ein weiteres Ausführungsbeispiel der erfindungsgemässen Vorrichtung.
- Fig. 9: eine Variante zu dem Apparat der Fig.1 und
- Fig. 10: eine Vorrichtung zum Entfernen von Oel aus Wasser.

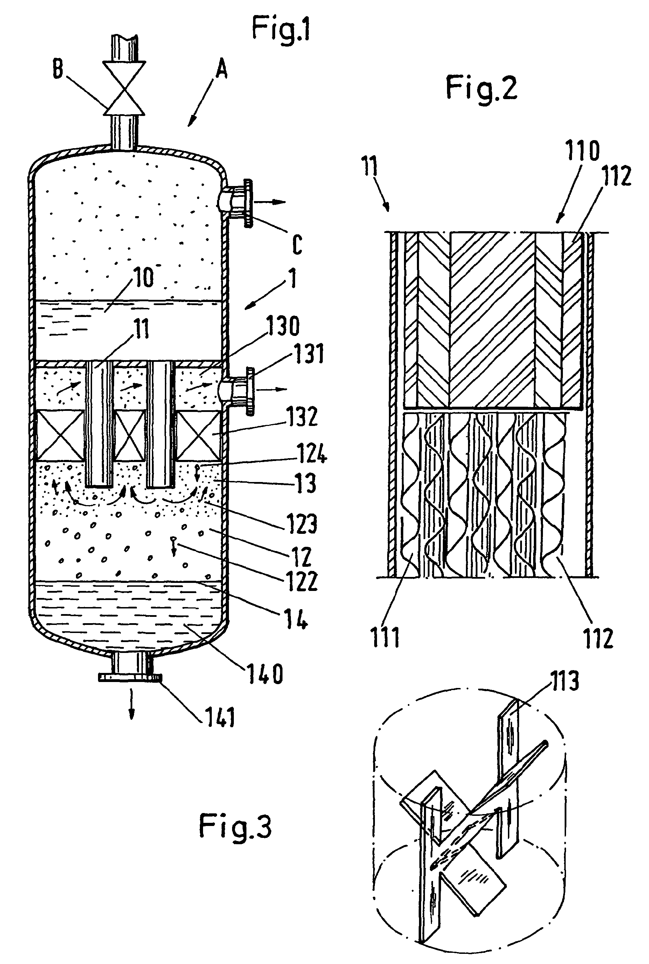

In Fig. 1 ist ein Dreiphasentrennapparat A dargestellt, der eine erfindungsgemässe Vorrichtung 1 zum Trennen eines flüssigen Zweiphasengemisches 10, insbesondere zum Trennen von Wassertröpfchen aus Oel, umfasst. Durch ein Ventil B wird ein Dreiphasengemisch, das neben den zwei flüssigen Phasen eine Gasphase enthält, in den Apparat A eingespeist, in diesem das Gas von dem Zweiphasengemisch 10 getrennt und das Gas über den Stutzen C aus dem Apparat A entfernt. Im Zweiphasengemisch 10 ist eine erste Flüssigkeit in Tröpfchenform in einer zweiten Flüssigkeit enthalten, wobei im dargestellten Beispiel die erste Flüssigkeit (Wasser) eine grössere Dichte als die zweite (Oel) hat.

Das Gemisch 10 wird in der Vorrichtung 1 nach dem erfindungsgemässen Verfahren weitgehend in die beiden Flüssigkeiten getrennt: Ein erster Schritt des Verfahrens findet in Organen 11 statt, die Einbauten 110 enthalten, beispielsweise statische Mischer gemäss Fig. 2. Durch eine Turbulenz in den Einbauten 110 ergibt sich eine Koaleszenz, bei der grössere Tröpfchen durch Einfangen von kleineren Tröpfchen anwachsen. Die mittlere Geschwindigkeit der tubulenten Strömung hat einen Wert zwischen 100 und 1000 mm/s. In einem unter den Organen 11 liegenden Raum 12 setzt sich die Koaleszenz fort (zweiter Schritt). Die Strömungsgeschwindigkeit ist reduziert (50 und 500 mm/s), so dass sich die grösseren Tröpfchen 122 absetzen können. Sie bilden im Sumpf der Vorrichtung 1 eine hauptsächlich aus der ersten Flüssigkeit bestehende Phase 140 mit einer Grenzfläche 14, die fraktale Eigenschaften hat: die Grenzfläche 14 wird aus einer emulsionsartigen Übergangszone gebildet, in der sich die Tröpfchen 122 nach und nach zu der kontinuierlichen Phase 140 vereinigen. Die erste Flüssigkeit der Phase 140 kann über den Stutzen 141 aus dem Apparat A abgelassen werden. Die zweite Flüssigkeit, die eine kleinere Dichte hat, bewegt sich aus dem Raum 12 nach oben, wobei die kleinsten Tröpfchen 123 der schwereren Flüssigkeit mitgeführt werden. Im darüberliegenden Raum 13 fliesst die zweite Flüssigkeit relativ langsam (10 bis 100 mm/s; dritter Schritt), so dass auch noch weitere Tröpfchen 122 abgeschieden werden. Mit Einbauten 132 kann das Abscheiden der ersten Flüssigkeit gefördert oder beschleunigt werden, indem zusätzlich Tröpfchen, die durch die zweite Flüssigkeit mitgeführt werden, an Oberflächen der Einbauten 132 haften bleiben und nach unten rinnende Filme bilden, die sich schliesslich als grössere Tropfen 124 von den Einbauten 132 lösen. Über einen Stutzen 131 kann die zweite Flüssigkeit, die weitgehend von der ersten befreit ist, aus dem Apparat A entnommen werden.

Das in Fig.2 ausschnittsweise dargestellte Organ 11 ist zylinderförmig und enthält einen statischen Mischer 110. Dieser ist aus parallel angeordneten, gewellten Lagen 111 aufgebaut und weist eine Kreuzkanalstruktur auf, d.h. er bildet eine geordnete Struktur oder Packung mit sich offen kreuzenden Kanälen. Der Mischer ist aus mehreren Einheiten 112 zusammengesetzt, wobei benachbarte Einheiten bezüglich ihrer Lagen quer zueinander orientiert sind. Für die Einbauten 132 des dritten Verfahrensschritts kann auch eine Kreuzkanalstruktur vorgesehen sein. Es sind für die Einbauten 110 des Organs 11 viele Strukturen verwendbar. Ein alternatives Strukturelement 113 - ebenfalls für ein Organ 11 mit kreisförmigem Querschnitt - ist in Fig. 3 gezeigt. Die entsprechende Einbautenstruktur setzt sich aus einer linearen Anordnung solcher Strukturelemente 113 zusammen.

Der erste Verfahrensschritt kann auch mindestens zwei Teilschritte umfassen, so dass jeweils von einem dieser Teilschritte zum nachfolgenden die Webersche Zahl (We) der Strömung aufgrund von Änderungen des hydraulischen Durchmessers und/oder der Geometrie der Einbauten abnimmt. Dabei nimmt der mittlere Durchmesser der koaleszierenden Tröpfchen dank einer Verringerung der Turbulenz zu. (Vgl. dazu die oben zitierte Publikation von Streiff, Beziehungen (5), (8) und Bild 4, aus dem ersichtlich ist: je kleiner die Webersche Zahl We, desto grösser die Tröpfchen. - We = ρ w² dₕ σ⁻¹ = Produkt der Dichte, der Strömungsgeschwindigkeit im Quadrat, des hydraulischen Durchmessers der Einbauten und des Reziprokwerts der Grenzflächenspannung.)

Bei der Durchführung des erfindungsgemässen Verfahrens in einer Versuchsanlage wurde ein Gemisch von Wasser (erste Flüssigkeit) und Paracryol (zweite Flüssigkeit) getrennt. In einem Dispergator wurden Wassertröpfchen erzeugt, deren mittlerer Durchmesser im Bereich zwischen 10 und 30 µm lag. Nach der Durchführung des ersten Schritts bildeten sich im zweiten Schritt Wassertröpfchen, deren Durchmesser grösser als 3 mm waren. Das Paracryol enthielt nach der Entfernung der Wassertröpfchen noch ca. 0.05% Wasser. Die Verweilzeit des Paracryol in der Testanlage betrug rund 60 Sekunden, also rund 3 bis 10 Mal weniger als bei bekannten Trenneinrichtungen. Mit der Versuchsvorrichtung wurden 2 bis 3 m³/h Flüssigkeit behandelt.

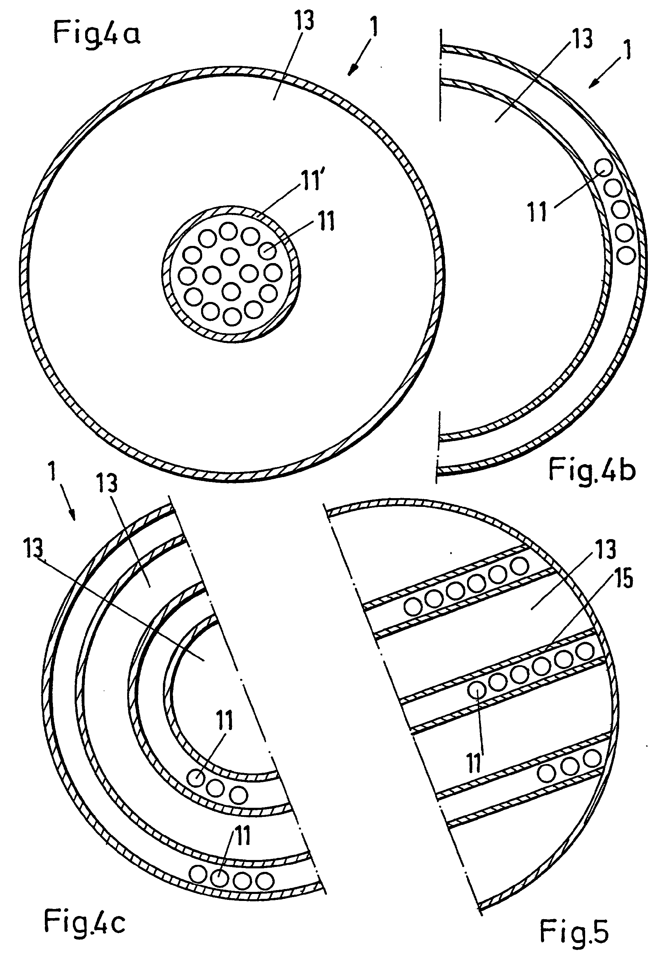

Die Figuren 4a bis 4c und Fig. 5 zeigen Querschnitte durch Vorrichtungen 1, die zur Behandlung grosser Mengen (1000 bis 1200 m³/h) an Zweiphasenflüssigkeit vorgesehen sind. In Fig. 4a bilden die Organe 11 ein Bündel aus einer Vielzahl von statischen Mischem, die jeweils einen zylindrischen Querschnitt aufweisen. Eine Trennwand 11' schliesst diese Anordnung im Zentrum eines kreisringförmigen Raums 13 ein, in dem der dritte Schritt des erfindungsgemässen Verfahrens stattfindet. Die Organe 11 können auch - siehe Fig. 4b - in einem Ringraum oder - siehe Fig. 4c - in mehreren Ringräumen angeordnet sein. In der Vorrichtung 1 der Fig. 5 sind die Organe 11 in Schächten 15 mit viereckigem Querschnitt angeordnet.

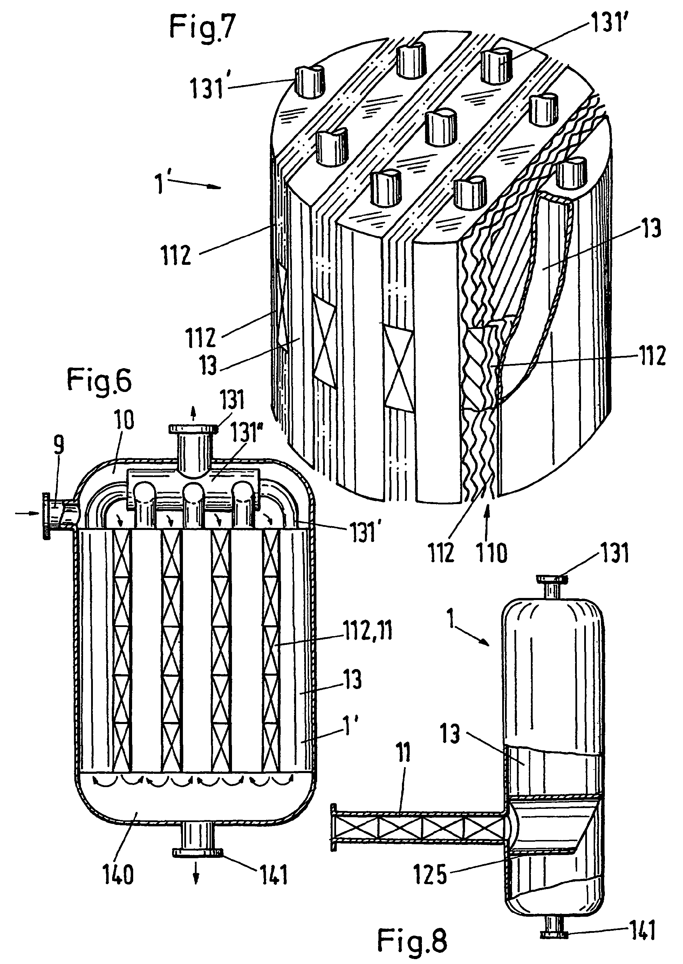

Schächte mit viereckigem Querschnitt werden - wie in den Figuren 6 und 7 gezeigt - mit Vorteil mit Einbauten gefüllt, die sich über den ganzen Querschnitt erstrecken.

Die Vorrichtung 1 der Fig. 6 enthält den in Fig. 7 dargestellten Einsatz 1'. Dieser ist lagenweise und alternierend aus statischen Mischern 110 (Kreuzkanalstruktur) und Hohlräumen 13, die unten offen sind, aufgebaut. Die Räume 13 können Packungen 132 (vgl. Fig. 1) enthalten. An ihren oberen Enden kann die zweite Flüssigkeit nach der Behandlung mit dem erfindungsgemässen Verfahren über Rohre 131' entnommen und über ein Sammelrohr 131'' dem Ausgangsstutzen 131 zugeführt werden. Anstelle von Einbauten mit der Kreuzkanalstruktur kann auch sehr gut die oben genannte Wirbelpackung verwendet werden.

Bei der Vorrichtung 1 der Fig. 6 wird das zu behandelnde Gemisch über den seitlichen Stutzen 9 zugeführt und die von den Tröpfchen befreite Produktflüssigkeit durch den oberen Stutzen 131 entnommen. Es kann vorteilhafter sein, wenn das zu behandelnde Gemisch oben zugeführt und die Produktflüssigkeit seitlich entnommen werden können. Dies ist möglich, wenn im Einsatz 1' der Fig. 7 die für den ersten Verfahrenschritt vorgesehenen statischen Mischerstrukturen 110 mit den Packungen in den Hohlräumen 13 für den dritten Verfahrenschritt ausgetauscht werden.

In Fig. 8 ist eine Vorrichtung 1 gezeigt, in der das Organ 11 für den ersten Verfahrensschritt horizontal ausgerichtet ist. Im vertikalen Behälter 13 wird der dritte Schritt durchgeführt. In einem Rohrstück 125, das horizontal in Fortsetzung zum Organ 11 im Behälter 13 angeordnet ist, findet die Koaleszenz des zweiten Schrittes statt. Der durch das Rohrstück 125 abgegrenzte Teilraum hat an seinem Ausgang, der in den Innenraum des Behälters 13 führt, eine gegen unten sich vergrössernde Öffnung. Auf das Rohrstück 125 kann auch verzichtet werden, da der Verfahrensschritt 2 auch ohne dieses in dem genannten Teilraum stattfinden würde. Der Behälter 13 kann wiederum Einbauten enthalten.

Mit dem erfindungsgemässen Verfahren lässt sich ein weitgehend oelfreies Wasser gewinnen. Die Reinheit des Wassers hängt von den Verhältnissen im Sumpf 140 der Vorrichtung 1 (siehe Fig. 1) ab, insbesondere von folgenden Parametern: Menge der pro Zeiteinheit auf der fraktalen Grenzfläche 14 sich absetzenden Tröpfchen und Verweilzeit des Wassers im Sumpf 140. Mittels Einbauten im Sumpf 140 kann die Reinheit noch verbessert werden.

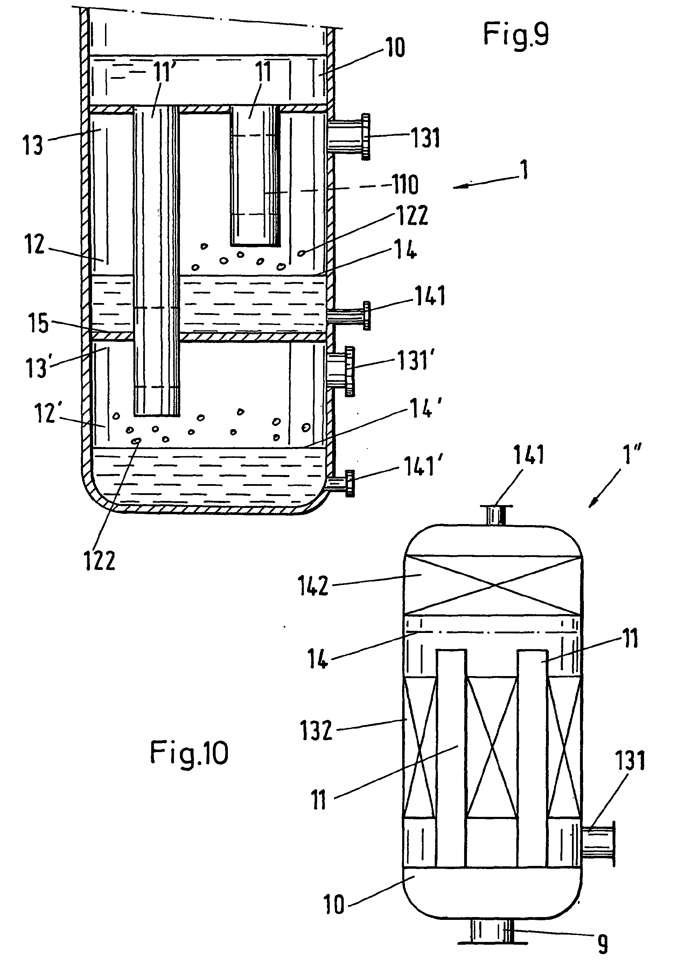

Die fraktale Grenzfläche 14 ist im wesentlichen eine schichtförmige Zone, deren Dicke mit zunehmender Rate der sich absetzenden Tröpfchen ebenfalls zunimmt. Die Reinheit des abgeschiedenen Wassers hängt von der Dicke dieser Zone ab. Für eine hohe Reinheit muss die Zone möglichst dünn sein. Dies lässt sich konstruktiv mit einer Vorrichtung erreichen, wie sie in Fig. 9 gezeigt ist.

Die Vorrichtung 1 in Fig. 9 ist eine Modifikation jener der Fig. 1, wobei nun ein erster Teil des Gemisches 10 durch einen der statischen Mischer 11 in eine erste Kammer 12, 13 und ein zweiter Teil durch den anderen Mischer 11' in eine darunter angeordnete zweite Kammer 12', 13' geführt werden. Eine Wand 15 trennt die beiden Kammern. In diesen Kammern finden jeweils der zweite und der dritte Verfahrensschritt statt. Da der gesamte Flächeninhalt der fraktalen Grenzflächen 14 und 14' nun gegenüber jenem in Fig.1 verdoppelt ist, ist für das Wasser, das über die Stutzen 141 und 141' abfliesst, eine bessere Reinheit zu erwarten, wenn in beiden Fällen gleich grosse Mengen behandelt werden. Das Oel, das ebenfalls eine etwas bessere Qualität aufweisen kann, tritt über die beiden Stutzen 131 und 131' aus der Vorrichtung 1 aus. Selbstverständlich können entsprechend auch mehr als zwei Kammern 12, 13 bzw. 12', 13' vorgesehen sein, um die fraktalen Grenzflächen 14, 14' noch weiter zu vergrössern.

Das erfindungsgemässe Verfahren lässt sich auch bei einer Reinigung von Meerwasser, das durch einen Tankerunfall verschmutzt worden ist, verwenden. In diesem Fall sind Oeltröpfchen (erste Flüssigkeit) in Wasser (zweite Flüssigkeit) enthalten. Entsprechend muss eine Vorrichtung zum Trennen der beiden Flüssigkeiten gegenüber den oben beschriebenen Vorrichtungen umgekehrt werden. Die Fig. 10 zeigt schematisch dargestellt eine derartige Vorrichtung 1'': ein Zuführstutzen 9 für verunreinigtes Wasser (Gemisch 10) unten, ein Entnahmestutzen 141 für abgetrenntes Oel oben und ein Entnahmestutzen 131 für gereinigtes Wasser seitlich. Die Behandlung des Gemisches erfolgt wieder in statischen Mischern 11 (mit Mischerstrukturen 110) und weiteren Einbauten 132, die vorteilhafterweise die Form von Packungen mit Kreuzkanalstruktur aufweisen. Über der strichpunktiert angedeuteten Grenzfläche 14, die auch hier wieder fraktale Eigenschaften hat (in Wasser suspendierte Oeltröpfchen sowie in Oel suspendierte Wassertröpfchen), sind weitere Einbauten zur Abtrennung von mitgeführten Wassertröpfchen aus dem aufschwimmenden Oel vorgesehen.

Im Idealfall kann das Wasser bis auf 40 ppm Oel gereinigt werden. Bei grösseren Unfällen ist es aber vorzuziehen, grosse Mengen an Wasser rasch und bei entsprechender Einbusse hinsichtlich der Reinheit zu behandeln.

## Patentansprüche

1. Verfahren zum Trennen eines Flüssigkeitsgemisches (10), das aus einer ersten und einer zweiten Flüssigkeit besteht, wobei die eine Flüssigkeit nicht in der anderen löslich ist, die erste Flüssigkeit als Tröpfchen in der zweiten enthalten ist und die beiden Flüssigkeiten verschiedene Dichten aufweisen, welches Verfahren folgende drei Schritte umfasst:
1. zur Erzeugung einer Koaleszenz der Tröpfchen wird das Flüssigkeitsgemisch während einer ersten Zeitdauer als turbulente Strömung durch Einbauten (110, 113) - insbesondere durch einen in Packungskolonnen verwendbaren Füllkörper oder einen statischen Mischer - geleitet,
2. die Strömung wird zu einer weiteren Ausbildung der Koaleszenz während einer zweiten Zeitdauer bei einer verkleinerten Geschwindigkeit gehalten und
3. schliesslich wird die Strömung bei weiter verkleinerter Geschwindigkeit entgegen bzw. mit der Schwerkraft geführt, wobei grössere, sich absetzende bzw. aufsteigende Tropfen (122) gesammelt und abgeschieden werden, wärend kleinere Tröpfchen (123) durch die zweite Flüssigkeit weiter mitgeführt werden.

2. Verfahren nach Anspruch 1, **dadurch gekennzeichnet, dass** die für Geschwindigkeit der Strömung gemittelten Werte zwischen 0.1 und 1 m/s für den ersten Schritt, zwischen 0.05 und 0.5 m/s für den zweiten Schritt und zwischen 0.01 bis 0.1 m/s für den dritten Schritt liegen.

3. Verfahren nach den Ansprüchen 1 oder 2, **dadurch gekennzeichnet, dass** während des dritten Schrittes das Absetzen der Tropfen durch Einbauten (132), die eine zusätzliche Koaleszenz bewirken, begünstigt wird.

4. Verfahren nach Anspruch 3, **dadurch gekennzeichnet, dass** für die Einbauten (110; 132) des ersten und/oder des dritten Schritts Packungen mit geordneter Struktur verwendet werden.

5. Verfahren nach einem der Ansprüche 1 bis 4, **dadurch gekennzeichnet, dass** der erste Schritt mindestens zwei Teilschritte umfasst und dass jeweils von einem dieser Teilschritte zum nachfolgenden die Webersche Zahl der Strömung aufgrund von Änderungen des hydraulischen Durchmessers und/oder der Geometrie der Einbauten abnimmt, so dass dank einer Verringerung der Turbulenz der mittlere Durchmesser der koaleszierenden Tröpfchen zunimmt.

6. Anwendung des Verfahrens gemäss einem der Ansprüche 1 bis 5, **dadurch gekennzeichnet, dass** die eine Flüssigkeit Wasser und die andere Oel ist, wobei insbesondere das Oel aus einer Erdölquelle oder einer ölhaltigen Erdgasquelle gewonnen ist.

7. Vorrichtung (1) zur Durchführung des Verfahrens nach einem der Ansprüche 1 bis 4, **dadurch gekennzeichnet, dass** sie einen vertikalen Behälter umfasst, der folgendes enthält:
eine Kammer zum Sammeln des genannten Flüssigkeitsgemisches (10), insbesondere zum Sammeln von wasserhaltigem Oel, sowie zum Verteilen des Flüssigkeitsgemisches in einen anschliessenden Bereich, in diesem Bereich
a) Organe (11) mit Einbauten, insbesondere parallel geschaltete und vertikal angeordnete Rohre (11), die jeweils einen Füllkörper, insbesondere einen statischen Mischer (110) enthalten, zur Durchführung des ersten Schrittes sowie
b) einen Sammelraum (130) für die zweite Flüssigkeit zwischen Behälterwand und den Organen zur Durchführung des dritten Schrittes, ferner zur Durchführung des zweiten Schrittes einen weiteren Bereich (12) im Behälter, in den die Organe münden und dessen Querschnitt gegenüber der Summe der Querschnitte der Organe so vergrössert ist, dass sich eine für den Übergang von dem ersten zu dem zweiten Schritt vorgesehene Geschwindigkeitsverminderung einstellt.

8. Vorrichtung gemäss Anspruch 7, wobei die Organe (11) Schächte mit viereckigem Querschnitt sind und der Sammelraum sich aus parallel angeordneten Kammern (13) mit jeweils viereckigem Querschnitt zusammensetzt.

9. Vorrichtung nach Anspruch 8, **dadurch gekennzeichnet, dass** die Schächte (11) und parallel angeordneten Kammern (13) Packungen (110) mit geordneter Struktur enthalten, insbesondere mit solchen gefüllt sind.

10. Vorrichtung nach einem der Ansprüche 7 bis 9, **dadurch gekennzeichnet, dass** für den ersten Schritt mindestens zwei in Serie geschaltete Zonen vorgesehen sind und dass jeweils von einer dieser Zonen zur nachfolgenden die Webersche Zahl einer durchströmenden Flüssigkeit abnimmt aufgrund von Änderungen des hydraulischen Durchmessers und/oder der Geometrie der Einbauten (110), die insbesondere statische Mischer oder eine Wirbelpackung sind, so dass dank einer Abnahme der Turbulenz in Strömungsrichtung der mittlere Durchmesser der koaleszierenden Tröpfchen zunimmt.

11. Vorrichtung nach einem der Ansprüche 7 bis 10, **dadurch gekennzeichnet, dass** für die Durchführung des zweiten und dritten Verfahrensschritts zwei durch eine Wand (15) getrennte Kammern (12, 13; 12', 13') vorgesehen sind und dass die eine dieser Kammern über der anderen angeordnet ist.

## Claims

1. Method for the separation of a liquid mixture (10) which consists of a first and a second liquid, with the one liquid not being soluble in the other, with the first liquid being contained as droplets in the second one, and with the two liquids having different densities, said method comprising the following three steps:
1. for the production of a coalescence of the droplets the liquid mixture is conducted during a first time interval as a turbulent flow through installations (110, 113) - in particular through a filler body which can be used in a packing column or through a static mixer -,
2. the flow is held at a reduced speed during a second time interval for a further development of the coalescence and
3. finally the flow is conducted at a further reduced speed opposite to or with the force of gravity respectively, with larger descending or rising drops (122) respectively being collected and separated out, whereas smaller droplets (123) are carried along further by the second liquid.

2. Method in accordance with claim 1, **characterised in that** the averaged values for the speed of the flow lie between 0.1 and 1 m/ s for the first step, between 0.05 and 0.5 m/s for the second step and between 0.01 to 0.1 m/s for the third step.

3. Method in accordance with claim 1 or claim 2 **characterised in that** the depositing of the drops is encouraged during the third step by installations (132) which effect an additional coalescence.

4. Method in accordance with claim 3 **characterised in that** packings with an ordered structure are used for the installations (110; 132) of the first and/or the third step.

5. Method in accordance with one of the claims 1 to 4 **characterised in that** the first step comprises at least two partial steps; and **in that** in each case the Weber number of the flow decreases from one of these partial steps to the following one as a result of the changes in the hydraulic diameter and/or of the geometry of the installations so that the average diameter of the coalescing droplets increases thanks to a lessening of the turbulence.

6. The use of the method in accordance with one of the claims 1 to 5, **characterised in that** the one liquid is water and the other is oil, with in particular the oil being won from a petroleum source or a natural gas source containing oil.

7. Apparatus (1) for carrying out the method in accordance with one of the claims 1 to 4 **characterised in that** it comprises a vertical container which contains the following:
a chamber for the collection of the said liquid mixture (10), in particular for the collection of oil containing water and for the distribution of the liquid mixture into a following region,
in this region
a) a vertical member (11) with inbuilt structures, in particular tubes (11) which are connected in parallel and arranged vertically and which in each case contain a filler body, in particular a static mixer (110) for carrying out the first step and
b) a collection space (130) for the second liquid between the container wall and the members respectively for carrying out the third step,
furthermore, for carrying out the second step, a further region (12) in the container into which the members respectively open and of which the cross-section is enlarged with respect to the sum of the member cross-sections in such a manner that a speed reduction sets in which is provided for the transition from the first to the second step.

8. Apparatus in accordance with claim 7, with the members (11) being shafts with rectangular cross-sections and the collection space being assembled from chambers (13) which are arranged in parallel and which each have a rectangular cross-section.

9. Apparatus in accordance with claim 8 **characterised in that** the shafts (11) and the chambers (13) which are arranged in parallel contain packings (110) with an ordered structure, in particular are filled with the latter.

10. Apparatus in accordance with one of the claims 7 to 9 **characterised in that** at least two zones which are connected in series are provided for the first step; and **in that** in each case the Weber number of a fluid which flows from one of these zones to the following one decreases as a result of changes of the hydraulic diameter and/or of the geometry of the installations (110), which are in particular static mixers or a turbulence packing; so that the average diameter of the coalescing drops increases thanks to a decrease in the turbulence in the direction of flow.

11. Apparatus in accordance with one of the claims 7 to 10 **characterised in that** two chambers (12, 13; 12', 13') which are separated by a wall (15) are provided for carrying out the second and third method step; and **in that** the one of these chambers is arranged above the other.

## Revendications

1. Procédé pour séparer un mélange de liquides (10) qui est constitué d'un premier et d'un second liquide, dans lequel un liquide n'est pas soluble dans l'autre, le premier liquide est contenu dans le second liquide sous forme de gouttelettes et les deux liquides présentent des densités différentes, lequel procédé comprend les trois étapes suivantes :
1. Pour produire une coalescence des gouttelettes, le mélange de liquides est dirigé, pendant une première période de temps, sous forme d'un écoulement turbulent à travers des éléments de montage (110, 113) - en particulier à travers un corps de remplissage ou un mélangeur statique utilisable dans des colonnes à garniture -,
2. L'écoulement est maintenu à une vitesse plus faible pendant une deuxième période de temps pour une autre formation de la coalescence et
3. Finalement, l'écoulement est guidé à une vitesse encore plus faible contre ou avec la force de gravité, les gouttes plus grosses qui se déposent ou qui montent (122) étant collectées et séparées pendant que les gouttelettes plus petites (123) continuent d'être entraînées par le second liquide.

2. Procédé selon la revendication 1, **caractérisé en ce que** les valeurs moyennes calculées pour la vitesse de l'écoulement sont comprises entre 0,1 et 1 m/s pour la première étape, entre 0,05 et 0,5 m/s pour la deuxième étape et entre 0,01 et 0,1 m/s pour la troisième étape.

3. Procédé selon la revendication 1 ou 2, **caractérisé en ce que** le dépôt des gouttes à travers les éléments de montage (132) qui provoquent une coalescence supplémentaire est favorisé pendant la troisième étape.

4. Procédé selon la revendication 3, **caractérisé en ce que** l'on utilise des garnitures ayant une structure ordonnée pour les éléments de montage (110; 132) de la première et/ou de la troisième étape.

5. Procédé selon l'une quelconque des revendications 1 à 4, **caractérisé en ce que** la première étape comprend au moins deux étapes partielles et **en ce que** le nombre de Weber de l'écoulement diminue entre l'une de ces étapes partielles et la suivante en raison de variations du diamètre hydraulique et/ou de la géométrie des éléments de montage, de sorte que, grâce à une réduction de la turbulence, le diamètre moyen des gouttelettes coalescentes diminue.

6. Utilisation du procédé selon l'une quelconque des revendications 1 à 5, **caractérisée en ce qu'**un liquide est de l'eau et l'autre de l'huile, l'huile étant obtenue, en particulier, à partir d'une source de pétrole ou d'une source de gaz naturel contenant de l'huile.

7. Dispositif (1) pour la réalisation du procédé selon l'une quelconque des revendications 1 à 4, **caractérisé en ce qu'**il comprend un réservoir vertical qui comprend les parties suivantes:
une chambre pour collecter le mélange de liquides mentionné (10), notamment pour collecter l'huile contenant de l'eau, ainsi que pour répartir le mélange de liquides dans une zone raccordée,
dans cette zone
a) des organes (11) avec des éléments de montage, notamment des tubes montés en parallèle et disposés verticalement, qui contiennent chacun un corps de remplissage, en particulier un mélangeur statique (110), pour la réalisation de la première étape ainsi que
b) une chambre collectrice (130) pour le second liquide entre la paroi du réservoir et les organes pour la réalisation de la troisième étape, de plus, pour la réalisation de la deuxième étape, une autre zone (12) dans le réservoir dans laquelle débouchent les organes et dont la section transversale est agrandie par rapport à la somme de sections transversales des organes de telle manière que l'on obtient une diminution de la vitesse prévue pour la transition entre la première et la deuxième étape.

8. Dispositif selon la revendication 7, dans lequel les organes (11) sont des compartiments avec une section transversale carrée et la chambre collectrice est composée de chambres (13) disposées en parallèle avec chacune une section transversale carrée.

9. Dispositif selon la revendication 8, **caractérisé en ce que** les compartiments (11) et les chambres (13) disposées en parallèle contiennent des garnitures (110) avec une structure ordonnée, en particulier **en ce qu'**ils sont remplis avec ceux-ci.

10. Dispositif selon l'une quelconque des revendications 7 à 9, **caractérisé en ce que**, pour la première étape, il est prévu au moins deux zones montées en série et **en ce que** le nombre de Weber d'un liquide qui s'écoule diminue entre l'une de ces zones et la suivante en raison de variations du diamètre hydraulique et/ou de la géométrie des éléments de montage (110), qui sont notamment des mélangeurs statiques ou une garniture à turbulence, de sorte que, grâce à une réduction de la turbulence dans le sens d'écoulement, le diamètre moyen des gouttelettes coalescentes diminue.

11. Dispositif selon l'une quelconque des revendications 7 à 10, **caractérisé en ce que**, pour la réalisation de la deuxième et de la troisième étape de procédé, il est prévu deux chambres (12, 13 ; 12', 13') séparées par une paroi (15) et **en ce que** l'une de ces chambres est disposée au-dessus de l'autre.
